# FASCICULE DE BREVET EUROPEEN

(11) **EP 1 121 642 B1**
(45) Date de publication et mention de la délivrance du brevet: **05.02.2003**
(21) Numéro de dépôt: 99947525.4
(22) Date de dépôt: 11.10.1999
(51) Int. Cl.: G06F 11/14, G06F 12/14

(54) **PROCEDE DE TRAITEMENT D'UN SYSTEME ELECTRONIQUE SOUMIS A DES CONTRAINTES D'ERREURS TRANSITOIRES**
VERFAHREN ZUR BEHANDLUNG EINES VORÜBERGEHENDEN FEHLERN UNTERWORFENES ELEKTRONISCHES SYSTEMS
METHOD FOR PROCESSING AN ELECTRONIC SYSTEM SUBJECTED TO TRANSIENT ERROR CONSTRAINTS

(30) Priorité: 12.10.1998 FR 9812745
(43) Date de publication de la demande: 08.08.2001
(60) Demande divisionnaire: 02076483.3
(73) Titulaire: CENTRE NATIONAL D'ETUDES SPATIALES, 75001 Paris (FR)
(72) Inventeur: PIGNOL, Michel, F-31000 Toulouse (FR)
(74) Mandataire: Ilgart, Jean-Christophe
(86) Numéro de dépôt international: FR9902430
(87) Numéro de publication internationale: WO00022529

(56) Documents cités:
- EP-A- 0 133 004
- EP-A- 0 813 152
- FURHT B ET AL: "A SURVEY OF MICROPROCESSOR ARCHITECTURES FOR MEMORY MANAGEMENT" COMPUTER,US,IEEE COMPUTER SOCIETY, LONG BEACH., CA, US, vol. 20, no. 3, page 48-67 XP002034222 ISSN: 0018-9162
- JANUSZ SOSNOWSKI: "TRANSIENT FAULT TOLERANCE IN DIGITAL SYSTEMS" IEEE MICRO, vol. 14, no. 1, 1 février 1994 (1994-02-01), pages 24-35, XP000433306
- MAHMOOD A ET AL: "CONCURRENT ERROR DETECTION USING WATCHDOG PROCESSORS - A SURVEY" IEEE TRANSACTIONS ON COMPUTERS, vol. 37, no. 2, 1 février 1988 (1988-02-01), pages 160-174, XP000648398

## Description

### DOMAINE TECHNIQUE

La présente invention concerne un procédé de traitement d'un système électronique soumis à des contraintes d'erreurs transitoires, par exemple dans le domaine spatial.

### ÉTAT DE LA TECHNIQUE ANTÉRIEURE

Le procédé de l'invention concerne toutes les architectures informatiques soumises à des erreurs transitoires. Ainsi, par exemple, les domaines suivants utilisent des calculateurs soumis à des environnements perturbants pour les composants électroniques (radiations, perturbations électromagnétiques) susceptibles d'engendrer de telles erreurs :
- domaines spatial, nucléaire et aéronautique, où l'environnement est constitué entre autre d'ions lourds,
- domaine automobile, soumis à un environnement électromagnétique sévère.

Dans la suite de la description, on considérera, à titre d'exemple, le domaine spatial du fait qu'il est très représentatif des erreurs transitoires aléatoirement générées sur des composants électroniques, et parce que c'est dans ce domaine qu'a été initialement développé et évalué le procédé de l'invention.

Les concepteurs d'architectures informatiques pour satellites sont confrontés au problème des radiations existantes dans l'espace, qui sur terre sont filtrées par l'atmosphère. Ces radiations peuvent avoir pour effet un « événement singulier » qui occasionne des changements d'états temporaires de bits dans les composants mémoires, dans les registres internes de microprocesseurs ou d'autres composants intégrés. Les erreurs engendrées par ces événements singuliers peuvent, par exemple aboutir à la génération de données erronées, par exemple une mauvaise commande d'un actuateur d'un satellite, ou à une perturbation grave du séquencement du logiciel, par exemple plantage d'un microprocesseur.

Jusqu'à présent, la solution aux erreurs de type événement singulier résidait dans l'utilisation de technologies de circuits intégrés peu sensibles à ce phénomène, dites « tolérantes aux radiations », voire insensibles, dites « durcies aux radiations ». De telles technologies, qui ne sont pas utilisées en micro-électronique industrielle, ont été développées spécifiquement pour des applications militaires et spatiales.

Le coût global associé à l'existence de ces technologies micro-électronique et au développement de composants utilisant de telles technologies, et donc le coût de vente de ces composants, est très élevé. Le ratio du coût entre un circuit durci et un circuit commercial peut être de 100 ou plus.

La part de marché des composants militaires, dit « haute fiabilité », a fortement chuté, de 80% dans les années 1960 à moins de 1% en 1995. A partir de 1994, le département américain de la défense a donné un coup de frein à l'utilisation de composants électroniques militaires pour ses applications, et accéléré le processus d'appropriation par les activités militaires des spécifications/normes/composants commerciaux.

Comme décrit dans le document référencé [1] en fin de description, l'utilisation de composants électroniques commerciaux est devenu un challenge auquel est confronté le domaine spatial.

L'utilisation de composants commerciaux dans les applications spatiales est un problème auquel est confronté tout projet de nouvelle génération. Un problème majeur à résoudre est alors la sensibilité de ces composants aux radiations, et en particulier aux ions lourds : cet aspect qui était traité au niveau « composant » antérieurement, doit alors être résolu au niveau « architecture » et « système ». Comme décrit dans les deux documents référencés [2] et [3], les satellites, et donc leur électronique embarquée, sont en effet soumis à un environnement radiatif, composé de différentes particules (électrons, ions lourds, protons), que ne connaissent pas les systèmes utilisés au sol car ces particules sont filtrées par l'atmosphère.

Ces particules peuvent être dues :
- au rayonnement cosmique d'origine en partie extra galactique, en partie galactique, constitué d'ions extrêmement énergétiques,
- aux ceintures de radiation constituées d'électrons et de protons piégés engendrés suite à des interactions entre l'atmosphère terrestre et des particules solaires,
- aux éruptions solaires qui émettent des protons ou des ions lourds,
- au vent solaire généré par l'évaporation du plasma coronal, permettant l'échappement à l'attraction gravitationnelle du soleil de protons et d'ions de faible énergie.

Ces particules énergétiques, en percutant et traversant un composant électronique, lui transfèrent une partie de leur énergie qui va perturber le bon fonctionnement de celui-ci. On considère ici les problèmes nommés « événements singuliers », créés par les ions lourds et les protons.

Ces événements singuliers correspondent à la génération d'erreurs dans des cellules qui mémorisent des valeurs binaires, d'où des erreurs de bits. En règle générale, un seul bit est modifié par un ion lourd. Ces événements ne sont pas destructifs et l'on peut par la suite écrire une nouvelle donnée ; celle-ci est mémorisée sans erreur, à moins de l'apparition d'un autre événement singulier dans cette même cellule. C'est la raison pour laquelle on utilise dans la suite le terme « faute transitoire » pour caractériser les erreurs engendrées par ces phénomènes.

Comme on l'a déjà présenté ci-dessus, la réalisation de l'électronique embarquée sur satellite est la plupart du temps réalisée avec des composants insensibles aux radiations, soit spécifiquement fabriqués pour cela, soit obtenus par sélection de composants non spécifiquement fabriqués pour cela.

Pour pouvoir utiliser des composants commerciaux dans le domaine spatial sur une large échelle, une première possibilité est une sélection par test en radiation systématique des composants commerciaux. Une telle méthode serait non seulement très coûteuse sur le plan de la sélection, mais encore un pis aller car elle ne permet pas forcément d'utiliser les grands standards de l'industrie, ce qui est pourtant souhaitable.

Une deuxième possibilité économiquement plus rentable permet de réduire les contraintes sur les choix de composants. Elle consiste à trouver une méthode permettant de tolérer les phénomènes engendrés par les radiations, en particulier les erreurs transitoires, c'est-à-dire définir des architectures permettant de détecter les erreurs, puis de les corriger. La prise en compte des fautes transitoires est alors transférée du niveau « composant » au niveau « architecture » et « système ».

Un ensemble de mécanismes de détection, isolation et recouvrement de fautes est décrit dans les documents référencés [4], [5] et [6]. Certains mécanismes permettent simplement de détecter des erreurs, d'autres de les détecter puis de les masquer, voire de les corriger. Par ailleurs, ces mécanismes sont adaptés au traitement soit de fautes temporaires, soit de pannes définitives, soit des deux.

Un rappel succinct de mécanismes usuels est proposé ci-dessous, avec quelques exemples d'application en particulier dans le domaine spatial :
- Evitement de fautes : rafraîchissement systématique des données statiques avant leur utilisation effective ; autotests dits « off-line » (en dehors du fonctionnement nominal) permettant de détecter une panne de composant avant que celui-ci ne soit utilisé.
- Codes détecteurs ou détecteurs/correcteurs d'erreurs qui s'appliquent aux mémoires, aux communications, et éventuellement à la logique, essentiellement dans la réalisation de circuits intégrés spécifiques d'une application (ASIC) ou de circuits logiques programmables par l'utilisateur (FPGA) à contrôle intégré. Des circuits à détection et correction d'erreurs (EDAC) sont systématiquement utilisés en spatial sur les plans mémoire. Une fonction de relecture systématique (ou « scrubbing ») de tout le plan mémoire est associée à ces circuits et s'exécute en tâche de fond afin d'éviter l'accumulation d'erreurs dormantes qui, à terme, pourraient mettre en défaut la possibilité de détection/correction.
- Duplication et comparaison, ou triplication et vote majoritaire (« N Modular Redondance », redondance modulaire d'ordre N). Ces mécanismes permettent d'obtenir des architectures sûres (« fail safe ») lors d'une panne qui ne généreront pas de mauvaise commande mais qui s'arrêteront à la première faute (duplex), ou des architectures restant opérationnelles (« fail opérational ») lors d'une panne, qui auront la capacité de masquer une erreur simple en temps réel et de poursuivre en restant « sûres » (triplex). On trouve également dans cette classe les architectures maître/contrôleur où l'on duplique uniquement les microprocesseurs, les données sortant du « maître » étant vérifiées par le « contrôleur » ; le microprocesseur ERC-32 de la société MHS S.A. intègre un tel mécanisme.
- Méthode de programmation multiple (« N-version programming »), associée aux architectures à redondance modulaire d'ordre N, qui permet de détecter également des erreurs de conception logicielle. Chaque calculateur dispose d'une version de logiciel qui a été développée spécifiquement à partir d'une spécification commune.
- Redondance temporelle : il s'agit soit d'avoir deux exécutions successives suivies d'une comparaison, soit d'avoir une seule exécution suivie du chargement d'un registre de commande puis de la relecture de celui-ci afin de réaliser une comparaison et une validation, tel le mécanisme « armer puis tirer » utilisé en spatial pour les commandes très critiques, par exemple le déclenchement des éléments pyrotechniques.
- Contrôle du temps d'exécution : des « chiens de garde », compteurs de temps qui permettent de vérifier l'exécution en une durée bornée d'un logiciel, sont utilisés dans tous les calculateurs spatiaux. De plus, des contrôles plus fins du temps d'exécution peuvent être incorporés dans le logiciel : contrôle de la durée d'une tâche, durée maximale autorisée pour obtenir la réponse d'un éléments de communication, etc. Des logiciels permettent de positionner des contrôles sur la durée d'exécution des tâches.
- Vérification du flot de contrôle, par exemple contrôle du séquencement d'un microprocesseur. Les chiens de garde permettent un contrôle grossier : détection d'un plantage dur. Un contrôle fin du flot d'instruction est possible avec un processeur de surveillance plus ou moins complexe. Le contrôle par analyse de signature est particulièrement efficace et peu demandant en électronique. Ce concept a été intégré dans l'ERC-32 de la société MHS S.A. mais, pour être transparent à l'utilisateur, il a fallu développer un compilateur spécifique qui calcule les signatures de référence et les intègre dans le code.
- Contrôle de la validité de l'adressage d'un microprocesseur à partir des droits d'accès par pages/segments.
- Contrôle de vraisemblance : ce principe est utilisé dans les Systèmes de Contrôle d'Attitude et d'Orbite (ou SCAO) de satellites où l'on compare soit les données de plusieurs types de capteurs pour détecter des incohérences éventuelles, soit une donnée par rapport à une référence estimée grâce à un filtre prédictif sur les valeurs précédentes, soit une donnée par rapport à une plage d'appartenance prédéfinie. Les méthodes dites « tolérance aux fautes basée sur le traitement algorithmique » représentent une sous-classe des contrôles de vraisemblance, la vérification étant basée sur l'exécution d'un deuxième algorithme, par exemple l'algorithme inverse qui permet de retrouver les données initiales en partant des résultats obtenus si ceux-ci sont exempts d'erreurs.
- Contrôle structurel ou sémantique des données, nécessitant des structures de données relativement complexes.
- Concepts complémentaires de recouvrement d'erreurs, principalement des points de reprise pour les mécanismes décrits précédemment ne permettant pas de corriger les fautes : sauvegarde régulière de contextes et reprise à partir du dernier contexte sauvegardé.
- Une autre possibilité du recouvrement d'erreurs réside en la réinsertion d'une ressource en faute par transfusion d'un contexte sain dans un calculateur fautif, afin de retrouver la capacité initiale de détection/correction.

Il existe également des documents de l'art connu dans le domaine de la redondance temporelle.

Le document référencé [5] évoque la possibilité d'exécuter une tâche trois fois de suite et de « voter » le résultat.

La possibilité de réaliser un fonctionnement de type redondance modulaire d'ordre N en logiciel, est également mentionnée de façon théorique dans le document référencé [6].

Dans ce dernier document, une autre méthode permet de discriminer les fautes transitoires des fautes permanentes voire de les corriger. La détection n'est pas une méthode de redondance temporelle mais, par exemple, un codage des données. En cas de détection, le traitement est exécuté une deuxième fois ; si la deuxième exécution donne des résultats sans erreur, il s'agit d'une erreur transitoire et il est inutile de reconfigurer le système ; dans le cas inverse, une reconfiguration est nécessaire car il s'agit d'une faute permanente.

Dans ces deux documents, la redondance temporelle est mentionnée comme théoriquement possible, mais aucune information n'est fournie quand à la possibilité réelle de sa réalisation, aucun développement concret n'est cité. Certains problèmes restent entiers : en particulier, le vote peut-il être réalisé par le microprocesseur lui-même ou doit-il être réalisé par un organe externe et indépendant du microprocesseur. En effet, le résultat du vote se doit d'être robuste puisque c'est l'élément décisionnel, or le microprocesseur peut être victime de dysfonctionnement : erreur de données, plantage du séquencement, etc.. La réalisation du vote par le microprocesseur est donc un élément majeur non abordé. Par ailleurs, la granularité sur laquelle se base la détection n'est pas définie.

Le document référencé [7] est un peu plus concret. Il présente une évaluation comparative de deux méthodes de détection d'erreurs. L'une d'entre elles est nommée « triple redondance modulaire logicielle ». La triple redondance modulaire est considérée comme habituellement réalisée en matériel. La méthode évaluée dans cette publication utilise la redondance temporelle par exécution successive du logiciel, tous les modules, notamment le module vote, étant réalisés en logiciel et exécutés sur le même microprocesseur. C'est donc une approche purement logicielle. La figure 1, qui correspond à la figure 1 de ce document, illustre la réalisation de la détection : trois modules vote 1, 2 et 3 comparant chacun les résultats de l'exécution de trois traitements 4, 5 et 6 sont suivis d'un étage de décision 7, qui compare le résultat issu de chacun des modules votes pour vérifier la cohérence des trois traitements. La triple redondance modulaire logicielle est programmée sur un microprocesseur MC68000. Environ 1500 erreurs ont été injectées pour valider ce logiciel. La mémoire n'est pas protégée des erreurs par un circuit de détection et correction d'erreurs. Ce document conclut que seules les erreurs qui entraîneraient un traitement à en perturber un autre, ne peuvent pas être détectées. De plus, les erreurs affectant les communications entre programmes ne sont pas entièrement tolérées.

Ce document mentionne une réalisation concrète d'une architecture où les traitements sont exécutés trois fois de suite (redondance temporelle), et où le module vote est exécuté trois fois, les résultats des modules de vote étant ensuite eux-mêmes votés. Il apparaît que le vote n'est aucunement sécurisé, c'est pour cela qu'il doit être tripliqué. La prise finale de décision est alors confiée au dernier étage illustré sur la figure, qui est indirectement sécurisé par le fait qu'il est forcément d'une taille très faible (il suffit de quelques lignes de code pour voter trois données) : statistiquement, les événements singuliers affectant directement ce module sont négligeables, mais ceci ne le sécurise pas vis-à-vis des erreurs de séquencement du microprocesseur.

Le document référencé [8] présente également une réalisation de «triple redondance modulaire logicielle» sur un microprocesseur de type iAPX 432, réalisation proche de celle présentée dans le document référencé [7] : chaque sous-tâche logicielle est exécutée trois fois de suite, puis un module de vote logiciel est également exécuté trois fois, ce qui permet de conclure qu'il n'est pas sécurisé, ces tâches s'exécutant sur le même microprocesseur de façon asynchrone. Une phase d'injection d'erreur a permis de mettre en évidence des propagations d'erreurs entre sous-tâches, ce qui tend à montrer qu'il n'y a pas d'étanchéification des sous-tâches les unes par rapport aux autres.

Le document référencé [9] donne un aperçu général de procédé de traitement de système électronique ou digital soumis à des contraintes d'erreurs transitoires et mentionne, comme moyens de traitement, la redondance d'ordre spatiale ainsi que la redondance d'ordre temporelle.

Le document référencé [10] divulgue également un procédé de traitement d'un système électronique soumis à des erreurs, ledit système proposant l'utilisation d'une seule chaîne physique afin d'éviter l'utilisation de chaînes redondantes.

Le document référencé [11] décrit des procédés appliqués aux microprocesseurs récents pour permettre une gestion mémoire et une mémoire virtuelle. Un principe d'accès limité aux informations est envisagé. Certains droits d'accès à une page ou à un segment sont donnés à chaque processus, ces droits d'accès étant contrôlés en temps réel.

Une estimation du taux d'événements singuliers dans un calculateur spatial typique a été réalisée ; ce taux dépend bien sûr d'hypothèses comme du nombre de cellules mémoire et de la valeur de la sensibilité d'une cellule unitaire prise en compte. Une simulation de la criticité des erreurs sur la gestion de l'attitude d'un satellite a également été faite en prenant en compte la génération d'une mauvaise commande sur un actuateur moyennement critique d'un système de contrôle d'attitude et d'orbite, par exemple une roue à réaction. Il apparaît que le taux d'événements singuliers est faible, mais pas suffisamment pour négliger ce phénomène vis-à-vis de deux types de commandes :
- commendes les plus critiques : pyrotechnie, propulseurs, gestion batterie, etc. On ne peut pas prendre le risque de perdre un satellite plusieurs fois par an ;
- commandes moyennement critiques : roues à réaction, magnéto-coupleurs, etc. Certaines missions, en particulier commerciales (observation, télécommunication) ne sont pas compatibles de perturbations d'attitudes potentiellement engendrées par ces erreurs, même si celles-ci restent limitées.

Par ailleurs, la fréquence des événements singuliers est très largement supérieure à la fréquence du cycle temps réel du calculateur.

L'objet de l'invention est de proposer un procédé de traitement d'un système électronique soumis à des contraintes d'erreurs transitoires permettant d'utiliser des composants commerciaux malgré leur sensibilité aux événements singuliers, en permettant de détecter l'apparition d'erreurs transitoires et de les corriger.

### EXPOSÉ DE L'INVENTION

La présente invention concerne un procédé de traitement d'un système électronique soumis à contraintes d'erreurs transitoires, par exemple dans le domaine spatial, caractérisé en ce que dans un cycle temps réel donné, c'est-à-dire dans un cycle opérationnel donné d'une tâche logicielle qui s'exécute de façon périodique et continuelle, on multiplexe dans le temps deux chaînes virtuelles implantées sur une seule chaîne physique ; les données résultantes de chaque exécution d'une chaîne virtuelle étant stockées afin d'être votées avant utilisation, et en ce que, en cas de détection d'erreur, on inhibe le cycle temps réel en cours, et on recharge un contexte sain pour effectuer une reprise consistant en une exécution nominale du cycle suivant à partir du contexte rechargé.

Ainsi la correction d'erreurs est réalisée par rechargement d'un contexte sain, c'est-à-dire celui calculé lors du cycle temps réel qui précède le cycle où l'erreur a été détectée, puis par exécution nominale (c'est-à-dire en refaisant de nouvelles acquisitions) du cycle qui suit celui où l'erreur a été détectée à partir du contexte restauré ; ce type de correction est caractérisé par l'apparition d'un « trou » d'un cycle temps réel dans l'exécution du logiciel (celui où l'erreur a été détectée).

Avantageusement on peut avoir également les caractéristiques suivantes.

On peut utiliser trois niveaux de zones de confinement des erreurs : temporel, logiciel et matériel ; le confinement au niveau temporel des erreurs ne pouvant se propager d'un cycle temps réel à l'autre ; confinement au niveau logiciel des erreurs ne pouvant se propager d'une tâche logicielle à l'autre et également d'une chaîne virtuelle à l'autre ; confinement au niveau matériel des erreurs apparaissant dans l'électronique d'acquisition ou dans l'unité centrale et ne pouvant se propager dans l'électronique de commande (pas de génération de fausses commandes).

On peut utiliser un plan mémoire de l'unité centrale protégé des événements singuliers par code détecteur et correcteur d'erreur.

La granularité de détection/correction retenue peut être le cycle opérationnel des tâches logicielles s'exécutant sur le calculateur, ce qui permet de réduire fortement les contraintes apportées par la fonction « sauvegarde de contexte » activée régulièrement. ainsi que par la fonction « restauration de contexte » activée lors d'une ccrrection d'erreurs, par rapport aux solutions usuelles connues de l'homme du métier en ce que le nombre de variables appartenant au contexte est réduit au strict minimum à la frontière de deux cycles temps réel.

La fonction « sauvegarde de contexte » activée régulièrement peut être réalisée grâce à un changement d'index, offrant l'avantage que cette fonction a un impact quasi nul tant sur le coût de développement du logiciel que sur le temps d'exécution de cette fonction par le microprocesseur ; le seul impact résidant dans la recopie par cette fonction des variables du contexte ayant une durée de vie supérieure à la granularité de détection/correction, i.e. le cycle temps réel.

La fonction « restauration de contexte » activée lors dune correction d'erreurs peut être réalisée grâce au fait que l'index indiquant le contexte jugé sain, c'est-à-dire exempt d'erreurs, du cycle opérationnel précédent ne doit pas être changé, alors qu'il est basculé en temps normal, c'est-à-dire lorsqu'aucune erreur n'est détectée ; ce « non basculement » est inhérent à l'inhibition du cycle opérationnel dans lequel l'erreur est détectée, offrant ainsi l'avantage qu'il n'y a aucun impact de cette fonction tant sur le coût de développement du logiciel que sur le temps d'exécution de cette fonction par le microprocesseur, ce qui est inhabituel dans les solutions usuelles connues de l'homme du métier.

Dn peut utiliser une segmentation de la mémoire associée à un dispositif matériel de contrôle des droits d'accès, ce dispositif permettant de disposer de segments de tailles différentes et quelconques. Ce dispositif matériel de contrôle des droits d'accès permet plusieurs configurations d'accès, chaque configuration autorisant l'accès à un ou plusieurs segments non contigus. Ce dispositif matériel de contrôle des droits d'accès permet également la sélection des configurations d'accès selon des combinaisons logiques de une ou plusieurs clés.

On peut utiliser une mise en table des variables/données qui doivent être votées afin d'obtenir un module de vote à la fois simple et réutilisable d'une application à l'autre ; dans ce cas, le module de vote impacte de façon tout à fait négligeable le coût de développement du logiciel.

On peut utiliser un vote logiciel dont l'intégrité est assuré par des contrôles logiciels, incluant en particulier un processeur de surveillance logiciel, et matériels ; le vote déclenche également l'autorisation des transferts vers l'électronique de commande si aucune erreur n'est détectée.

On peut, enfin, utiliser un contrôle des transferts vers l'électronique de commande par un dispositif matériel vérifiant les droits d'accès et limitant dans le temps la validité de ce transfert (fenêtre de validation temporelle), délimitant ainsi une zone de confinement des erreurs au niveau matériel.

Dans le procédé de l'invention on a ainsi :
- Duplication temporelle de l'exécution des tâches, et vote des tables résultantes,
- Détection de toutes les erreurs de données grâce au vote des tables,
- Détection des erreurs de séquencement grâce aux dispositifs matériels et logiciels de sécurisation du vote et de contrôle des droits d'accès ;
- Correction transparente à l'application : tout se passe comme s'il y a avait un « trou » d'un cycle temps réel.

La minimisation des développements spécifiques est l'un des avantages du procédé de l'invention, à savoir :
- Pour le logiciel :
   - le regroupement des variables votées dans des tables,
   - le module de « Vote et génération des commandes », qui est par ailleurs réutilisable d'une application à l'autre,
   - la gestion du procédé de l'invention (gestion de la duplication temporelle, des dispositifs matériels de surveillance des accès mémoire et de fenêtre de validation temporelle, de la correction des erreurs).
- Pour le matériel :
   - la surveillance des accès mémoire et la fenêtre de validation temporelle : ce sont des composants simples, qu'il faut intégrer dans un circuit FPGA ou, mieux, dans le circuit ASIC associé usuellement au microprocesseur (décodage d'adresses, etc.), ils sont par ailleurs réutilisables d'une application à l'autre,
   - la protection de l'électronique des commandes critiques par des mécanismes usuels de tolérance aux fautes (e.g. instrumentation).

Les avantages du procédé de l'invention sont donc les suivants :
- Très peu de développement matériels,
- Très peu de développement logiciels,
- Minimisation des coûts récurrents (un seul calculateur) par rapport à d'autres architectures tolérantes aux fautes,
de telles caractéristiques étant inhabituelles dans le domaine de la tolérance aux fautes.

De plus l'utilisation de composants « commerciaux » dans le spatial présente les principaux avantages suivants :
- Résoudre le problème de la réduction constatée de l'offre en composants « haute fiabilité », suite aux retraits de ce marché de fournisseurs majeurs.
- Réduction des coûts, aspect stimulé par le contexte budgétaire. Or, le poste « composants haute fiabilité » est non négligeable dans le coût total du développement d'un équipement, et devient prépondérant dans son coût récurrent.
- Utilisation de fonctions/composants plus performants, permettant de réduire le volume d'électronique et/ou d'augmenter la fonctionnalité.
- Réduction de la durée de développement des projets pour offrir un accès à l'espace plus réactif, le délai d'approvisionnement des composants « haute fiabilité » étant couramment de un ou deux ans.

Avantageusement, le procédé de l'invention a une vocation générique, et peut être utilisé dans tout type de calculateur soumis à des contraintes d'erreurs transitoires, quelle que soit l'origine de ces erreurs (radiations cosmiques, impulsion électromagnétique, etc.), mais il s'applique tout naturellement au domaine spatial.

### BRÈVE DESCRIPTION DES DESSINS

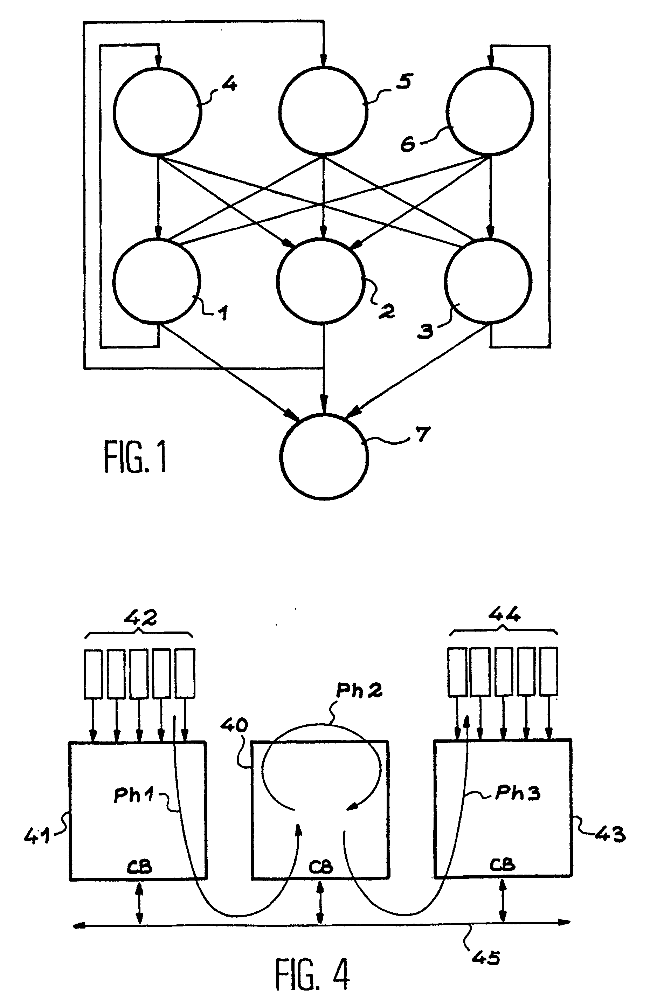

- la figure 1 illustre une réalisation de triple redondance modulaire logicielle de l'art connu,
- la figure 2 illustre le synoptique de l'architecture matérielle servant de référence dans la présente description,
- la figure 3 illustre le diagramme temporel de l'architecture logicielle de référence,
- la figure 4 illustre le séquencement de l'architecture de référence,
- les figures 5A et 5B illustrent le séquencement global de fonctionnement : respectivement sans utiliser, et en utilisant le procédé de l'invention,
- la figure 6 illustre une description fonctionnelle du procédé de l'invention,
- la figure 7 illustre le synoptique de l'ensemble du procédé de l'invention,
- la figure 8 illustre la zone de confinement des erreurs au niveau matériel,
- la figure 9 illustre le séquencement du procédé de l'invention et le basculement des tables de contexte,
- la figure 10 illustre le vote des données,
- les figures 11A et 11b illustrent la structure du vote du procédé de l'invention : respectivement les différentes erreurs de séquencement de type « plantage doux » et la structure de la procédure de vote/génération des commandes.

### EXPOSÉ DÉTAILLÉ DE MODES DE RÉALISATION PARTICULIERS

Dans la suite de la description, on considère à titre d'exemple une application du procédé de l'invention dans le domaine spatial.

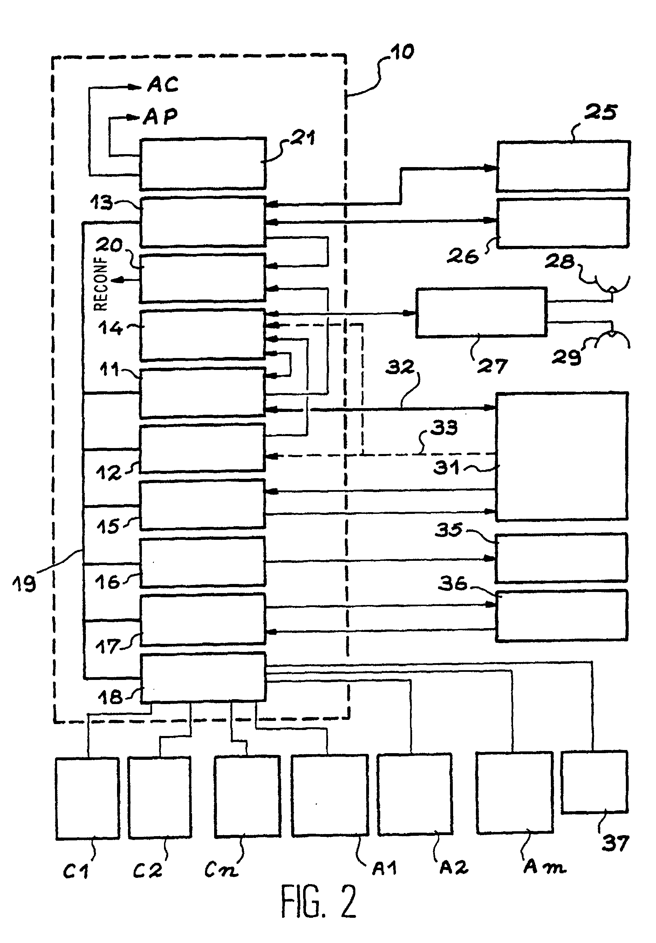

Une application typique et générique d'un calculateur utilisé en spatial est fournie ci-dessous, tant du point de vue matériel que logiciel. L'architecture de référence, illustrée sur la figure 2, sert de base à la description du procédé de l'invention.

L'unité de gestion de bord 10, illustrée sur cette figure 2, comprend :
- une unité centrale 11 réalisée autour d'un microprocesseur,
- une mémoire de masse 12
- des interfaces puissance 13, charge utile 15, pyrotechnie 16, thermique 17, système de contrôle d'attitude et d'orbite 18,
- reliés par un bus de données 19,
- un interface télécommande-télémesure 14
- une électronique de surveillance et de reconfiguration 20,
- des convertisseurs continu-continu 21 délivrant des alimentations commutées AC et permanentes AP.

L'interface puissance 13 est reliée à un générateur solaire 25 et à une batterie 26.

L'interface télécommande-télémesure 14 est relié à un émetteur/récepteur, duplexeur 27 en liaison avec des antennes 28 et 29.

La charge utile 31 est reliée à l'unité centrale 11 par un bus avionique 32, à la mémoire de masse 12 ainsi qu'à l'interface télécommande/télémesure 14 par une liaison série haut débit 33, à l'interface charge utile 15.

L'interface pyrotechnie 16 est relié à des systèmes déployables 35.

L'interface thermique 17 est reliée à des rechauffeurs, thermistances 36.

L'interface système de contrôle d'attitude et d'orbite 18 est relié à des capteurs C1, C2, ... Cn, à des actuateurs A1, A2 ... Am, et à un capteur de pression des réservoirs 37.

Une telle architecture est donc constituée de différents modules de traitement (module unité centrale) ou d'entrée/sorties (modules d'acquisition, modules de commande). Les modules d'entrée/sortie intègrent l'électronique de bas niveau (convertisseur analogique/numérique ou numérique/analogique, multiplexeurs de voies numériques ou analogiques, relais, etc.).

Les modules peuvent indifféremment être des cartes reliées par un bus fond-de-panier, ou des boîtiers complets reliés par un bus avionique. Dans les deux cas, l'interface au bus est réalisé par un Coupleur de Bus (CB) maître sur le module Unité Centrale, et par des coupleurs de bus abonnés sur les autres modules.

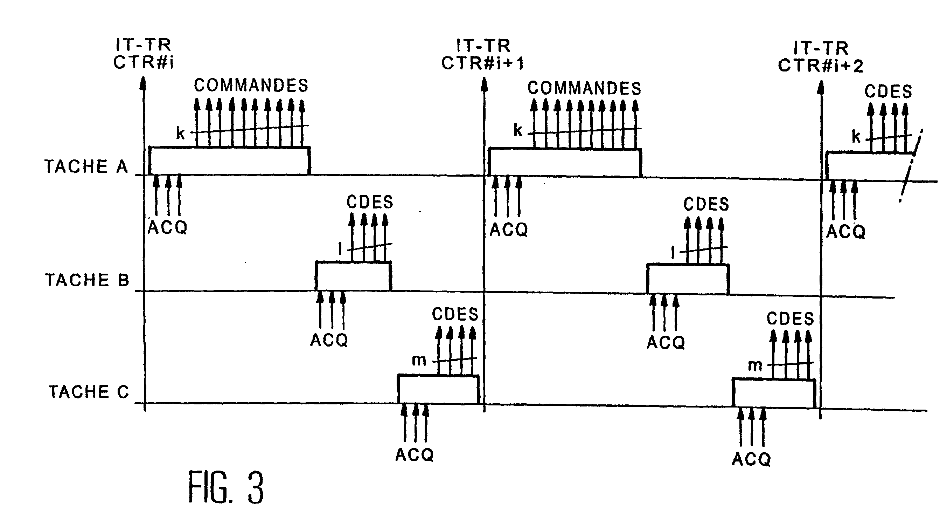

L'architecture logicielle de référence, comme illustrée sur la figure 3, est constituée de tâches de traitement (par exemple : tâche du système de contrôle d'attitude et d'orbite, tâche contrôle thermique, tâche horloge temps réel, tâche gestion bord, etc.), chaque tâche générant des résultats qui doivent sortir du calculateur (commandes ou cdes), ces résultats étant générés (i.e. sortis du calculateur) au fur et à mesure de leur calcul. Les acquisitions (ou Acq) sont groupées en début de cycle temps réel pour raison de cohérence temporelle (système de contrôle d'attitude et d'orbite par exemple).

Sur la figure 3 les tâches A, B et C sont représentées à la même fréquence pour des raisons de clarté de la description.

L'activité de ces tâches est rythmée par un cycle temps réel déclenché par une interruption Temps Réel IT-TR cyclique. Ce cycle permet de démarrer de façon cyclique certaines tâches, qui travaillent soit à la fréquence du cycle temps réel, soit à une sous-fréquence. D'autres tâches sont asynchrones, initialisées sur événements.

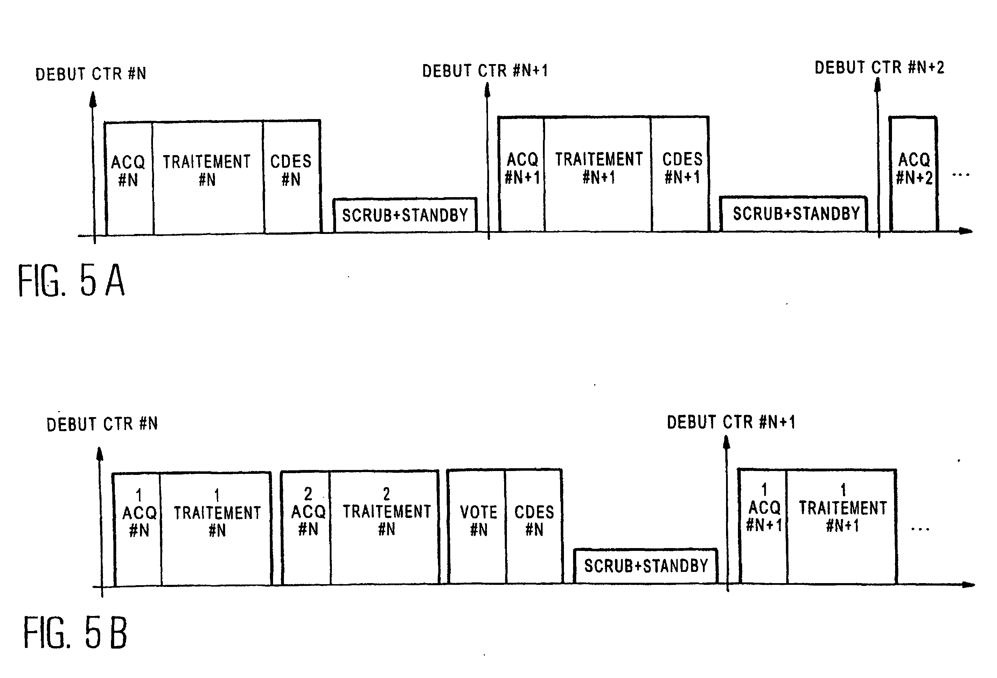

Une représentation faisant à la fois apparaître l'architecture de référence matérielle et logicielle est fournie à la figure 4. Sur cette figure sont représentées l'unité centrale 40, l'électronique d'acquisition 41 reliée à des capteurs 42, et l'électronique de commande 43 reliée à des actuateurs 44, ces deux électroniques 41 et 43, ainsi que l'unité centrale étant reliées à un bus de données 45.

Le séquencement des trois phases principales Ph1, Ph2 et Ph3, que sont l'acquisition de données, leur traitement, et la génération de commandes, mettent en jeu les trois parties distinctes de l'électronique 40, 41, 43, les phases Ph2 et Ph3 étant imbriquées.

La partie matérielle de cette architecture ne se base que sur des blocs fonctionnels et ne tient donc pas compte de la spécificité de composants particuliers et de leur capacités éventuelles dans le domaine de la détection/correction d'erreur. Le procédé de l'invention est donc autosuffisant. Cependant, l'utilisation d'éventuels mécanismes de tolérance aux fautes intégrés aux composants retenus pour une application donnée ne peut qu'améliorer le taux de couverture d'erreurs par rapport au procédé de l'invention seul.

Une détermination des signatures d'erreurs potentielles de l'architecture de référence soumise à des événements singuliers a été réalisée. Elle a permis de regrouper les erreurs en deux classes essentielles :
- les erreurs de données,
- les erreurs de séquencement, qui peuvent être également partagées en deux sous-classes :
   - « plantage doux» : branchement erroné, mais le microprocesseur retombe en phase avec les instructions, et poursuit un séquencement des instructions plus ou moins erratique ;
   - « plantage dur » : le microprocesseur n'est plus opérationnel ; par exemple le microprocesseur ne reste pas en phase avec les instructions, le microprocesseur charge le registre d'instructions avec des données, le pointeur de pile est perturbé, blocage du séquencement des instructions, attente d'un événement impossible, boucle infinie, etc.

Ces deux classes se subdivisent elles-mêmes en différentes sous-classes, dont la plus importante concerne les erreurs d'adresses.

La distinction entre plantage « doux » et « dur » est importante : autant un dispositif matériel externe au microprocesseur est généralement nécessaire à la détection des plantages « durs » (e.g. un chien de garde), autant un mécanisme logiciel peut être suffisant pour détecter un plantage « doux » puisque, dans ce dernier cas, le microprocesseur continue à exécuter du code, même si c'est de façon erratique.

Par ailleurs, les plantages du microprocesseur constituent une classe d'erreurs critiques, car un « microprocesseur fou » est capable d'actions pouvant avoir des conséquences catastrophiques pour une mission spatiale ; il est donc important de s'attacher à les détecter, et ceci avec un temps de latence court, et/ou de réaliser des zones de confinement d'erreurs afin de minimiser la probabilité de mauvaises commandes suite à une erreur non détectée.

On va à présent décrire le fonctionnement du procédé de l'invention proprement dit.

De façon globale, la granularité utilisée pour la détection/correction est le cycle temps réel de base du calculateur, par exemple le cycle de la tâche du système de contrôle d'attitude et d'orbite d'un calculateur de plate-forme.

En effet, dans le procédé de l'invention comme dans un duplex structurel, l'objectif est de laisser le calculateur travailler sans surveillance, et de choisir ou « voter » uniquement les données qui doivent sortir du calculateur (les commandes) ou qui servent à la correction (le contexte).

Le choix du cycle temps réel pour la granularité présente de nombreux avantages :
- c'est à cette fréquence que l'on accède en acquisition ou en commande à une majorité de capteurs/actuateurs ;
- c'est en fin de cycle temps réel que l'on dispose de données « actives » en nombre relativement restreint : il n'y a pas de multiples données intermédiaires, ni de variables locales en cours d'utilisation :
   - pour la détection, on les stocke en un jeu de tables qui sont votées,
   - pour la correction, on dispose d'un contexte de reprise simple et bien localisé.

De façon plus précise, la granularité de la détection/correction pour une tâche donnée est la fréquence de cette même tâche, puisque le vote se fait en fin de tâche. Par conséquent, si l'on considère une tâche du système de contrôle d'attitude et d'orbite à 10 Hz et une tâche thermique à 1 Hz, la granularité est de 10 Hz pour le système de contrôle d'attitude et d'orbite et de 1 Hz pour la thermique. Pour raison de clarté, on conserve dans la suite du document la notion de « granularité par cycle temps réel » plutôt que « par tâche ».

Pour bénéficier de l'efficacité du duplex, (deux chaînes identiques en parallèle, exécutant le même logiciel, avec comparaison des sorties), qui permet de détecter toutes les erreurs sans exception quel que soit leur type (erreur de données, d'adresses, de séquencement, de configuration, etc.), tout en supprimant la redondance structurelle, le procédé de l'invention consiste à implanter un fonctionnement duplex sur une seule chaîne physique. Dans un cycle temps réel donné, on multiplexe dans le temps deux chaînes virtuelles implantées sur une seule chaîne physique : les données résultantes de chaque exécution d'une chaîne virtuelle sont stockées dans des « tables du duplex multiplexé dans le temps » (e.g. commandes, contexte) afin d'être votées avant utilisation.

La correction consiste, suite à une détection, à inhiber le cycle temps réel en cours, et à recharger un contexte sain pour effectuer une reprise qui consiste en une exécution nominale du cycle suivant à partir du contexte rechargé : tout se passe comme s'il y avait un « trou » d'un cycle temps réel.

Le procédé de l'invention est basé sur le fait qu'une erreur générée par un événement singulier est transitoire : une telle erreur apparaissant pendant l'exécution de la première chaîne virtuelle n'est pas reproduite lors de l'exécution de la deuxième chaîne (ou réciproquement). Par contre, les erreurs statiques dans le temps ne peuvent être détectées par le procédé de l'invention : par exemple les pannes de composants (collage d'un bit, etc.), voire même certaines erreurs dues à des événements singuliers et qui provoqueraient une erreur permanente (e.g. blocage d'un séquenceur).

Les actions en aval du module vote, c'est-à-dire le transfert de données vers l'électronique de commande (i.e. le bus de données), ainsi que l'électronique de commande elle-même, ne sont pas protégées par le procédé de l'invention. L'utilisateur réalise une analyse système afin de déterminer les commandes critiques qui nécessitent d'être exemptes d'erreurs, et de les protéger par des mécanismes bien connus de l'homme de métier : codage des données, circuit d'auto-contrôle, instrumentation de l'électronique de commandes, etc.

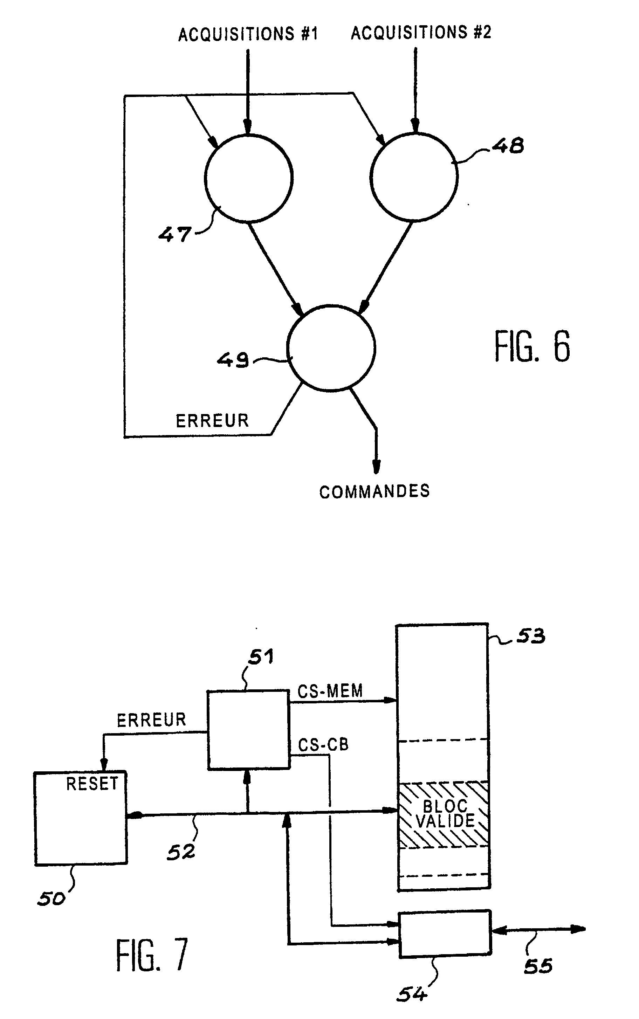

La figure 6 donne une description fonctionnelle du procédé de l'invention.

Sur cette figure on retrouve les flux de données (traits gras) grâce auxquels la chaîne virtuelle #1 47 reçoit les acquisitions #1, la chaîne virtuelle #2 48 reçoit les acquisitions #2, le voteur sécurisé 49 reçoit les sorties de ces deux chaînes 47 et 48, et émet les commandes. On retrouve également le signal d'erreurs (trait fin) qui relie le module vote sécurisé 49 aux deux chaînes virtuelles 47 et 48, pour réaliser une demande de rechargement de contexte afin d(initialiser une correction par reprise.

Le séquencement global du procédé de l'invention est illustré sur les figures 5A et 5B :
- figure 5A : séquencement sans le procédé de l'invention, les commandes étant néanmoins groupées en fin de traitement,
- figure 5B : séquencement avec le procédé de l'invention.

La figure 5A illustre deux cycles temps réels N et N+1, et le début du cycle N+2.

Chaque cycle temps réel est constitué de quatre phases distinctes dans le temps :
- acquisition des données,
- traitement avec calcul des commandes,
- transmission des commande,
- tâche de fond (« Scrub ») et veille (« Standby ») appelée ici « Scrub+Standby ».

La figure 5B illustre le procédé de l'invention, dans lequel chaque cycle temps réel est constitué de :
- acquisition chaîne virtuelle numéro 1 (ChV#1),
- traitement chaîne virtuelle numéro 1 ; les résultats étant stockés dans une table TAB#1,
- acquisition chaîne virtuelle numéro 2 (ChV#2),
- traitement chaîne virtuelle numéro 2 ; les résultats étant stockés dans une table TAB#2,
- vote des tables TAB#1 et TAB#2,
- génération des commandes
- tâche de fond et veille.

La figure 7 illustre un synoptique de l'ensemble du procédé de l'invention, en présentant l'ensemble des circuits permettant une mise en oeuvre de celui-ci.

Un premier module microprocesseur 50 permettant de gérer l'ensemble des mécanismes logiciels, en particulier :
- la duplication temporelle des tâches,
- la mise en table des variables,
- le vote sécurisé,
- la correction par reprise,
- la gestion des mécanismes matériels.

Un module 51 de surveillance d'accès mémoire et de fenêtre de validation temporelle est relié au bus 52 du microprocesseur 50, une mémoire à détection et correction d'erreur 53 et un coupleur de bus 54.

Le module 51 génère un signal d'erreur sur la borne « Reset » du microprocesseur 50, un signal de sélection (« chip-select », CS) sur la mémoire 53, et un signal de sélection sur le coupleur de bus 54.

La mémoire 53 est partagée en segments, chaque segment disposant d'un droit d'accès spécifique (validation par clés). Le coupleur de bus 54, qui est relié à un bus de données 55 donnant accès aux autres fonctions du calculateur (électronique d'acquisition, de commande, etc..) est validé par un signal de type « fenêtre temporelle ».

Le procédé de l'invention s'articule ainsi autour des caractéristiques suivantes :
- de trois niveaux de zones de confinement des erreurs : temporel, logiciel et matériel ;
- d'une mise en table des variables/données ;
- d'une duplication temporelle des traitements ;
- d'un module vote logiciel sécurisé unique permettant une détection d'erreur par comparaison des résultats de chacun des traitements, le module vote réalisant également la génération des commandes ;
- d'un processeur de surveillance logiciel qui participe au contrôle de l'intégrité du vote ;
- d'un plan mémoire de l'unité centrale protégé des événements singuliers par code détecteur et correcteur d'erreur ;
- d'une segmentation de la mémoire associée à un dispositif matériel de contrôle des droits d'accès qui, avec l'élément précédent, permet de sauvegarder de façon sûre le contexte de reprise et de détecter des erreurs d'adressage ;
- d'un contrôle des transferts vers l'électronique de commande, via le bus de données, par un dispositif matériel contrôlant le droit d'accès, délimitant ainsi une zone de confinement des erreurs ;
- d'une correction par reprise en cas d'erreur.

On va, à présent analyser successivement chacune de ces caractéristiques.

### Zones de confinement

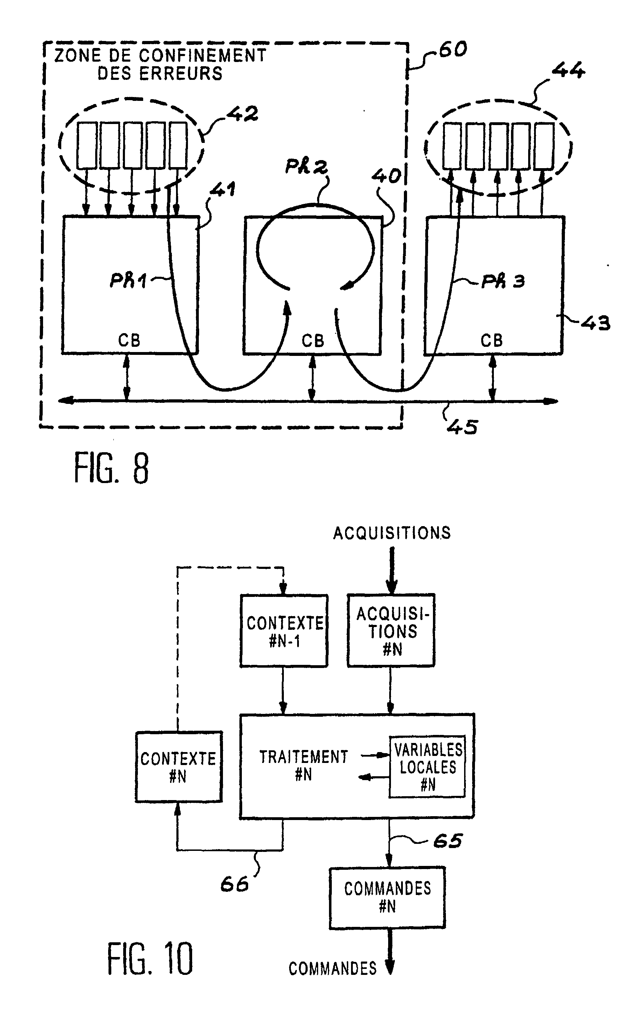

La zone majeure de confinement des erreurs 60 est constituée de l'électronique d'acquisition 41 et de l'unité centrale 40, comme illustré sur la figure 8 : sur cette figure on utilise les mêmes références que celles de la figure 4. Ainsi, si une erreur perturbe les acquisitions ou le traitement, cette erreur ne peut pas être générée vers l'électronique de commande 43. Les erreurs survenant suite à un événement singulier dans l'électronique d'acquisition 41 ou dans l'unité centrale 40 ne peuvent donc pas engendrer de mauvaises commandes du satellite ; elles ne perturbent pas la mission.

Cette zone de confinement 60 est, grâce au vote, effective pour les erreurs que le module vote est capable de détecter. Pour les autres erreurs, cette zone de confinement est également quasi étanche grâce à la présence d'un contrôle de droit d'accès : le dispositif matériel de fenêtre de validation temporelle bloque toute génération de commande sur le bus non autorisée.

Par ailleurs, d'autres zones de confinement sont définies dans le procédé de l'invention :
- confinement temporel des erreurs au niveau d'un cycle temps réel puisque la correction est basée sur une granularité d'un cycle temps réel ;
- confinement des erreurs au niveau des tâches logicielles grâce au dispositif de surveillance des accès mémoire et au niveau des chaînes virtuelles également grâce à la surveillance des accès mémoire.

### Tables du procédé

Le fonctionnement du procédé de l'invention s'appuie sur un jeu de tables où sont en particulier stockées les données à voter (ces tables sont donc dupliquées, un jeu étant géré par ChV#1, l'autre par ChV#2). On appelle ces tables « tables du duplex multiplexé dans le temps » car elles sont spécifiques au fonctionnement duplex, par opposition aux tables usuelles du logiciel. On peut citer par exemple :
- table d'acquisition (TAB-Acq),
- table de commande (TAB-Cde),
- table de contexte (TAB-Ctxt).

Pour permettre une restauration du contexte lors d'une correction par reprise, chacune des tables de contexte TAB-Ctxt#1 et TAB-Ctxt#2 est en fait constituée d'un jeu de deux tables qui travaillent en basculement un cycle sur deux en fin de tâche (i.e. en fin de vote). Un jeu de deux index « Old » (ancien) et « New » (nouveau), mémorisés en mémoire, leur est associé.

Ainsi, lors du cycle numéro N de la tâche K, pour la chaîne virtuelle 1, la première table est par exemple considérée comme « New » et notée TAB-Ctxt-New#1, la deuxième table est « Old » et notée TAB-Ctxt-Old#1. Si aucune erreur n'est détectée par le vote de la tâche K, le basculement en fin de vote intervertit les rôles : la première table devient alors TAB-Ctxt-Old#1, et la deuxième TAB-Ctxt-New#1.

Les zones « Old » sont interdites en écriture grâce au dispositif de surveillance des accès mémoire afin de protéger, par exemple, d'un plantage du microprocesseur, le contexte de reprise une fois voté et jugé sain.

### Séquencement - duplication temporelle

Par rapport à l'architecture logicielle de référence définie ci-dessus, le procédé de l'invention impose de ne pas générer les commandes au fur et à mesure de leur calcul comme indiqué à la figure 3, mais de les stocker dans une table en attente du vote (voir figure 5B). Lorsque le traitement est terminé pour les deux chaînes virtuelles, les tables sont votées et ce n'est que si aucune incohérence n'est détectée entre elles que le module de vote génère les commandes : i.e. l'une des deux tables de commande est envoyée par l'unité centrale 40 vers l'électronique de commande 43 par l'intermédiaire du bus 45.

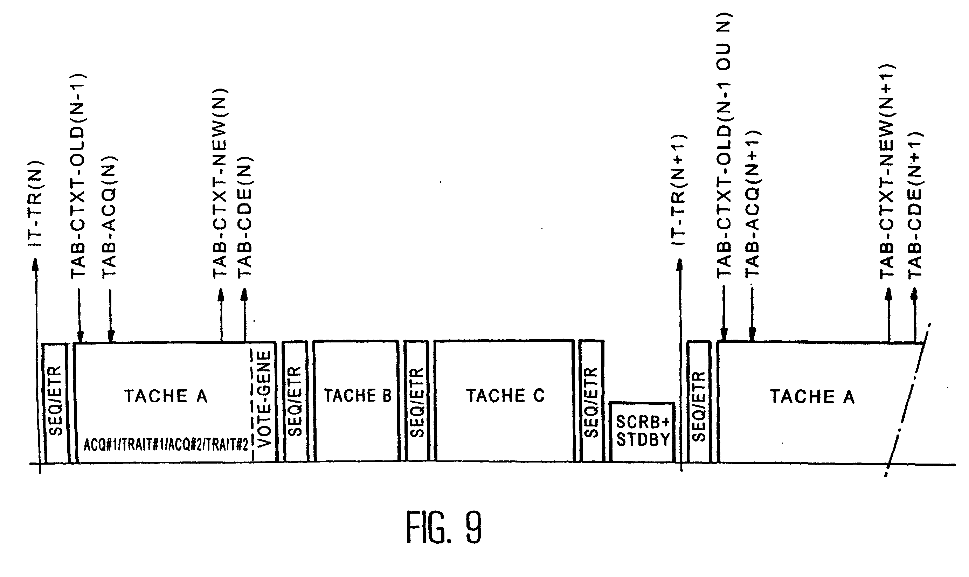

Le séquencement global du procédé de l'invention, pour une tâche donnée, incluant l'aspect duplication temporelle, est décrit ci-après au vu de la figure 9.

Cette figure illustre le séquencement du duplex multiplexé dans le temps, selon l'invention, et le basculement des tables de contexte.

Les cycles temps réel sont initialisés par des interruptions temps réel IT-TR.

Chaque cycle temps réel est constitué des phases suivantes :
- séquenceur/exécutif temps réel (ETR),
- tâche A,
- séquenceur/exécutif temps réel,
- tâche B,
- séquenceur/exécutif temps réel,
- tâche C,
- séquenceur/exécutif temps réel,
- tâche de fond et veille.

La tâche A consiste, de même que les tâches B et C, comme illustré sur la figure 5B, en :
- acquisition chaîne virtuelle numéro 1,
- traitement chaîne virtuelle numéro 1,
- acquisition chaîne virtuelle numéro 2,
- traitement chaîne virtuelle numéro 2,
- vote et génération des commandes.

On a les étapes suivantes :
- Pendant le Module « traitement » de la chaîne virtuelle numéro 1 (ChV#1) :
   - acquisition des données pour ChV#1 et stockage dans TAB-Acq#1 ;
   - exécution des traitement associés à ChV#1 à partir de TAB-Acq#1 et TAB-Ctxt-Old#1 ; les résultats de ces traitements sont stockés dans les tables TAB-Cde#1 et TAB-Ctxt-New#1 ; aucune commande n'est générée par l'unité centrale vers les actuateurs.
- Pendant le Module « Traitement » de la chaîne virtuelle numéro 2 (ChV#2) :
   - acquisition des données pour ChV#2 et stockage dans TAB-Acq#2 ;
   - exécution des traitements associés à ChV#2 à partir de TAB-Acq#2 et TAB-Ctxt-Old#2 ; les résultats sont stockés dans TAB-Cde#2 et TAB-Ctxt-New#2 ; aucune sortie n'est effectuée par le calculateur.
- Pendant le Module « Vote et génération des commandes », c'est-à-dire comparaison des tables et exécution des actions concernant les tables :
   - comparaison mot à mot de TAB-Cde#1 et TAB-Cde#2 ;
   - comparaison mot à mot de TAB-Ctxt-New#1 et TAB-Ctxt-New#2 ;
   - si aucune erreur n'est détectée, poursuite du processus ; sinon, mise en « standby », c'est-à-dire en veille ;
   - commutation des tables de contexte par changement d'index : TAB-Ctxt-New remplace TAB-Ctxt-Old et sert de contexte pour le prochain cycle temps réel ;
   - réalisation des commandes : l'une des deux TAB-Cde est vidée séquentiellement pour transférer les demandes de commandes vers l'électronique de commande via le bus de données ;
   - initialisation des paramètres du duplex multiplexé dans le temps (tables du duplex multiplexé dans le temps, variables de gestion du duplex multiplexé dans le temps).

Ainsi, à la figure 9, lors du cycle temps réel N+1, le contexte d'entrée de la tâche A est TAB-Ctxt-Old(N) si aucune erreur n'a été détectée lors du cycle temps réel N, cette table contenant en fait les données de TAB-Ctxt-New(N) grâce à la commutation ; sinon, le contexte d'entrée de la tâche A est TAB-Ctxt-Old(N-1), cette table étant identique à la table TAB-Ctxt-Old(N-1) du cycle temps réel N puisque la commutation des contextes n'a pas lieu en cas d'erreur.

Durant les modules de traitement, un code de contrôle (checksum) est calculé pour chacune des tables qui sont soumises au vote ; il participe à la vérification de l'exhaustivité (de l'intégrité) du vote.

### Vote logiciel sécurisé

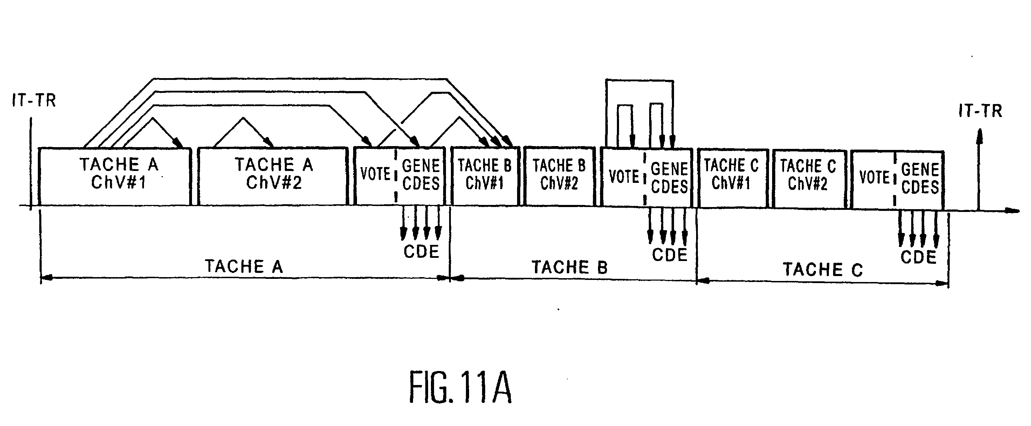

Les données qu'il est nécessaire au minimum de voter sont les différentes sorties du module de traitement, comme illustré sur la figure 10, à savoir :
- les données 65 sortant du calculateur (les commandes) pour ne pas générer d'actuations erronées,
- les données 66 servant à la reprise (le contexte :
   si le cycle N est en faute, les données saines N-1 seront restituées pour la reprise), le contexte de reprise se devant d'être sain.

Ainsi, toutes les données sortant du module de traitement sont votées. Le vote associé à une tâche donnée est réalisé en fin de cette tâche, ceci étant défini par la granularité de la détection/correction.

En ce qui concerne le module vote, le procédé de l'invention permet d'obtenir les caractéristiques suivantes :
- Pas besoin d'utiliser un composant externe tolérant aux événements singuliers si l'on sait définir des dispositifs de sécurisation du vote ; l'architecture en est ainsi simplifiée : le vote peut être réalisé par le microprocesseur lui-même, entièrement en logiciel, avec un support des quelques dispositifs matériels nécessaires par ailleurs dans le procédé de l'invention.
- Le vote logiciel n'est pas dupliqué.

Le procédé de l'invention est basé sur l'utilisation au mieux des capacités de détection d'une architecture duplex, c'est-à-dire pouvant détecter tous les types d'erreur, y compris les erreurs de séquencement qui sont à la fois les plus difficiles à détecter et qui ont potentiellement les conséquences les plus graves. Ces erreurs ont un impact sur la cohérence des tables du duplex multiplexé dans le temps ; elles sont donc détectées par un vote logiciel à condition qu'il soit sécurisé, c'est-à-dire qu'il ne puisse être déclenché par un microprocesseur fonctionnant incorrectement. Il faut donc s'assurer de l'intégrité du vote par des mécanismes adéquats.

La sécurisation du vote est basée sur deux éléments centraux :
- vérification en début de vote de l'état sain du microprocesseur et du module unité centrale,
- vérification en cours de vote de la complétude du vote, afin d'autoriser la génération des commandes.

La structure du vote est définie en fonction de l'analyse des possibilités de mauvais branchement d'un microprocesseur victime d'un plantage « doux », la figure 11A illustre les différentes erreurs de séquencement possible de type « plantage doux ».

Les « plantages durs » sont traités par un chien de garde, méthode usuelle pour l'homme de l'art.

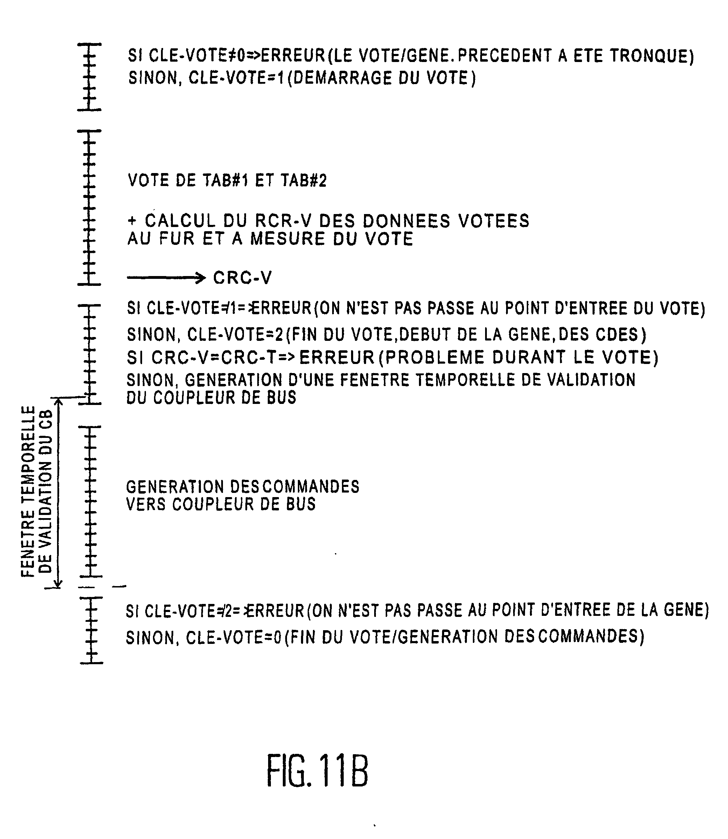

La structure du module de « Vote logiciel et génération des commandes » associé à la tâche K est illustrée sur la figure 11B est la suivante :
a)vérification de l'état du microprocesseur se branchant au début du vote et du module unité centrale : vérifier que le pointeur de pile est dans la zone autorisée, vérifier les registres de configuration du microprocesseur et de la carte unité centrale ;
b)inhibition des caches si possible pour minimiser la probabilité d'erreur durant le vote ;
c)vérification d'une variable Clé-Vote à 0, puis mise à 1 (i.e. vote) ; cette variable est une clé permettant de contrôler globalement le bon séquencement du microprocesseur grâce à un procédé de Surveillance Logiciel ;
d)activation de la clé du dispositif surveillance d'accès mémoire indiquant un vote en cours et autorisant l'accès simultané aux deux zones mémoire ChV#1 et ChV#2 ;
e)vote de toutes les tables résultantes du duplex multiplexé dans le temps et calcul d'un code redondant cyclique calculé lors des votes CRC-V, au fur et à mesure du vote, pour chaque table : TAB-Cde, TAB-Ctxt-New ;
f)vérification de Clé-Vote à 1, puis mise à 2 (i.e. génération des commandes) ;
g)comparaison des CRC-V aux codes redondants cycliques calculés lors des traitements CRC-T ;
h)inhibition de la clé du dispositif de surveillance d'accès mémoire indiquant un vote en cours ;
i)si le résultat des tests e, f et g est correct, alors ouverture d'une fenêtre de validation temporelle du coupleur de bus grâce au dispositif de fenêtre de validation temporelle ;
j)réinitialisation des registres de configuration des cartes de commandes ;
k)génération des commandes vers le coupleur de bus ;
l)vérification des registres de configuration des cartes de commandes, et action en fonction du type d'erreur éventuellement détecté (en général : réémission de la commande) ;
la fenêtre temporelle s'est terminée, ou va se terminer ;
m)vérification de Clé-Vote à 2, puis mise à 3 (i.e. commutation et initialisation) ;
n)basculement des tables de contextes de la tâche K en intervertissant son jeu d'index « Old » et « New » stocké en mémoire ;
o)initialisation de toutes les tables de la tâche K, hormis les tables « Old », avec des valeurs en complément à 1 entre ChV#1 et ChV#2 ;
p)transfert des tables « Old » vers les tables « New », et vote pour vérifier ce transfert ; ce transfert est nécessaire pour assurer la pérennité des variables qui ne sont pas mises à jour systématiquement à chaque exécution de tâche ;
q)vérification de Clé-Vote à 3, puis mise à 0 (i.e. inhibé) ;
r)validation des caches.

La procédure « vote/génération des commandes/commutation/initialisation des tables du duplex multiplexé dans le temps » est non sécable, i.e. elle ne doit pas être préemptée (une fois initialisée, elle doit se terminer). Une interruption peut, par contre, interrompre momentanément ce module.

### Processeur de surveillance logiciel

Un procédé de Surveillance Logiciel, connu de l'homme de métier, permet de confier au logiciel lui-même le contrôle du bon séquencement des instructions du microprocesseur. Le logiciel est découpé en segments élémentaires linéaires, c'est-à-dire compris entre deux branchements. Les segments linéaires ne comportant pas eux-mêmes d'instructions de branchement, une fois que le microprocesseur a exécuté la première instruction de ce segment, celui-ci doit forcément arriver jusqu'à l'exécution de la dernière instruction de ce même segment.

On vérifie que le microprocesseur est bien rentré dans un segment linéaire exactement à son point d'entrée, et non ailleurs, grâce au prélèvement d'une clé au point d'entrée et son contrôle au point de sortie.

La sécurisation du vote utilise entre autre ce procédé de Surveillance Logiciel ; la variable logicielle « Clé-Vote » étant une clé associée à ce procédé. Ce module vote est partitionné en trois segments fonctionnels (vote, génération des commandes, commutation et initialisation), le reste du logiciel applicatif représentant en quelque sorte un quatrième segment :
- en début de chaque segment, on contrôle la valeur de la clé du procédé de Surveillance Logiciel pour s'assurer que le microprocesseur est bien sorti du segment précédent exactement à son point de sortie et non ailleurs, on vérifie ainsi que les segments s'enchaînent bien les uns à la suite des autres ;
- puis, juste après ce contrôle de début de segment, on positionne la clé du procédé de Surveillance Logiciel à une valeur correspondant au segment courant ;
- en fin de chaque segment, on contrôle que le microprocesseur est bien rentré dans le segment courant exactement à son point d'entrée et non ailleurs.

### Protection du plan mémoire

Les plans mémoires sont classiquement protégés contre les événements singuliers par code correcteur (EDAC) et tâche de relecture en tâche de fond de tout le plan mémoire pour détecter et corriger les erreurs dormantes. Ceci est nécessaire car de multiples erreurs sur le même mot ne pourraient plus être détectées et/ou corrigées.

Le procédé de l'invention s'appuie :
- sur une mémoire fiable vis-à-vis des événements singuliers grâce à l'utilisation d'un code correcteur (EDAC) ;
- sur une mémoire fiable vis-à-vis des écritures incorrectes suite à une erreur d'adresse, d'instruction, un plantage du microprocesseur, etc., grâce à l'utilisation d'une surveillance des droits d'accès.

### Dispositif de surveillance des accès mémoire

Le dispositif de Surveillance des Accès Mémoire ou SAM est un dispositif matériel dérivé des classiques unités de protection mémoire par blocs. Il permet de vérifier que le microprocesseur cherchant à accéder à une zone mémoire délimitée, en possède bien le droit d'accès.

Le dispositif de surveillance d'accès mémoire permet de détecter une grande partie des erreurs d'adresses. Il permet, en particulier, de détecter très rapidement de nombreux cas de plantage du microprocesseur. En effet, suite à un plantage « doux », un microprocesseur peut fréquemment sortir de la zone d'adresses autorisée.

Le dispositif de surveillance d'accès mémoire dispose de certaines spécificités par rapport à une unité de protection mémoire par bloc classique :
- la taille des segments est quelconque, et définie en fonction de l'application ;
- l'autorisation d'accès se fait en programmant des clés mémorisées dans des registres internes au dispositif de surveillance d'accès mémoire, la définition et la combinaison de ces clés entre elles étant spécifiques au procédé de l'invention.

La liste des clés intégrées dans le dispositif de surveillance d'accès mémoire est la suivante :
- Clé d'interdiction d'accès en écriture à la zone mémorisant le code, car une erreur de code serait une erreur de mode commun aux deux chaînes virtuelles et ne pourrait pas être détectée par le vote. Cette clé permet d'autoriser l'écriture de la mémoire uniquement lors de l'initialisation du calculateur, lorsque le code en mémoire morte est transféré en mémoire vive.
- Clé indiquant quelle est la chaîne virtuelle courante, ChV#1 ou ChV#2, et interdisant au microprocesseur d'accéder à la zone mémoire contenant les tables de ChV#2 lorsque c'est ChV#1 qui est en train de s'exécuter (et réciproquement).
   Cette clé permet une étanchéification aux erreurs d'une chaîne virtuelle par rapport à l'autre.
- Clé indiquant un vote en cours d'exécution : lorsqu'elle est active, elle autorise exceptionnellement au microprocesseur d'accéder simultanément aux deux zones ChV#1 et ChV#2 pour pouvoir réaliser le vote.
- Clé indiquant quelle est la tâche courante, et autorisant le microprocesseur à n'accéder qu'à la zone mémoire contenant les tables de la tâche du logiciel en cours d'exécution. Cette clé permet une étanchéification aux erreurs d'une tâche par rapport aux autres.
- Clé indiquant quelle est, parmi les jeux de deux tables « Old »/ « New » travaillant en basculement, les zones « Old » et les zones « New », les zones « Old » étant interdites en écriture.

### Dispositif de fenêtre de validation temporelle

Le dispositif de Fenêtre de Validation Temporelle ou FVT est un dispositif matériel original. Il est réalisé à l'aide d'un compteur de temps classique. Il permet de confiner les erreurs au niveau matériel. Il est conçu pour :
- interdire à un microprocesseur planté qui irait exécuter du code de gestion de l'électronique de commandes, de générer une commande sans avoir acquitté correctement un droit d'accès ;
- interdire à un microprocesseur qui exécuterait une instruction erronée de type « écriture à une adresse correspondant à une commande » de générer une commande par inadvertance.

Le dispositif de fenêtre de validation temporelle protège donc le système de commandes intempestives, avec les conséquences potentiellement catastrophiques que celles-ci pourraient avoir pour l'application. Il est armé préalablement pour autoriser l'accès à l'électronique de commande : on ouvre une fenêtre de validation d'accès temporelle.

Dans les cas d'erreurs mentionnés ci-dessus, le microprocesseur n'accède pas à l'électronique de commande en exécutant la procédure d'interface de façon exhaustive ; par conséquent, l'accès non autorisé est immédiatement détecté par ce dispositif puisque le microprocesseur n'a pas ouvert préalablement la fenêtre de validation temporelle.

Le dispositif de fenêtre de validation temporelle est armé après avoir pris la décision qu'aucune erreur n'était présente. Cette décision est basée d'une part sur la vérification de l'état sain du microprocesseur et de l'unité centrale (en début de vote, puis avec la variable « Clé-Vote » et le contrôle de « checksum » en cours de vote), et d'autre part sur le résultat du vote.

### Correction

La correction s'exécute suivant le séquencement suivant :
- lorsqu'une erreur est détectée, le cycle temps réel courant (numéro N) est inhibé, aucune commande n'est générée : le microprocesseur passe en mode veille en attendant le cycle temps réel suivant,
- le cycle temps réel suivant N+1 s'exécute non pas à partir du contexte N, qui n'est pas sûr, mais du contexte précédent N-1, et des acquisitions du cycle courant N+1.

On ne rejoue pas le cycle temps réel fautif, on se contente simplement d'inhiber le cycle temps réel courant et de restaurer le contexte du cycle précédent. En cas d'erreur, le microprocesseur ne génère pas les commandes du cycle temps réel courant puisqu'il s'est mis en veille : tout se passe comme s'il y avait un « trou » d'un cycle temps réel.

La correction ne nécessite aucune action spécifique : le microprocesseur s'étant mis en veille après une détection, il ne poursuit pas l'exécution du module de vote ; cela entraîne naturellement une non permutation des contextes « Old » et « New » qui se fait en fin du module vote.

Étant donné le caractère transitoire des erreurs détectées par le procédé, une seule tentative de reprise est effectuée. Si elle est infructueuse, une réinitialisation complète du calculateur est alors nécessaire.

### Séquenceur - Exécutif temps réel

Le séquenceur, ou l'exécutif temps réel, qui permettent l'ordonnancement des tâches logicielles, ne sont pas directement protégés. L'objectif est de pouvoir utiliser un exécutif commercial, donc de ne pas le modifier pour y intégrer des mécanismes de tolérance aux fautes.

Par contre, le temps d'exécution qui leur est consacré, au regard du temps d'exécution total, est très faible. Par conséquent, les erreurs d'ordonnancement des tâches sont des modes communs aux deux chaînes virtuelles, non détectables, mais qui ont un impact très réduit sur le taux de couverture.

Par ailleurs, les zones de confinement permettent de bloquer une partie des erreurs non détectées avant qu'une mauvaise commande ne soit initialisée réduisant ainsi l'impact des erreurs provenant, entre autre, de l'ordonnanceur.

### Variantes de réalisation

Des variantes du procédé de l'invention sont possibles, en particulier en simplifiant certaines de ses caractéristiques, par exemple.
- Simplification des sécurités du vote : suppression du calcul de somme de contrôle « checksum », le contrôle par procédé de surveillance logiciel étant considéré comme suffisant.
- Simplification du dispositif de surveillance des accès mémoire : pas de cloisons étanches entre ChV#1 et ChV#2 (suppression de la clé indiquant la chaîne virtuelle courante), car la probabilité d'erreurs identiques entre les deux chaînes est a priori très faible.

### Developpement et réalisation du procédé de l'invention

Le procédé de l'invention a été développé dans le but de réaliser une validation la plus générique et la plus exhaustive possible, et d'effectuer une mesure du taux de couverture d'erreur que l'on peut atteindre.

### Objectif

L'objectif recherché était de disposer d'une réalisation (maquette) matérielle et logicielle représentative d'une application spatiale typique, dans le but de valider une fois pour toute le procédé. Un projet spatial en effet analyse, dans les phases préliminaires, les différentes solutions utilisables. Pour les solutions nouvelles, une preuve de bon fonctionnement et d'adéquation au besoin est recherchée à travers une maquette, ce qui entraîne des délais notables avant que l'équipe projet puisse se prononcer sur son utilisation.

Par conséquent, en avance de phase, une validation générique est entreprise afin de pouvoir fournir, à tout projet intéressé, un dossier complet : spécifications de besoin, spécifications de réalisation, dossiers de réalisation, résultats de validation, résultats de mesure de taux de couverture d'erreurs, etc.

Ainsi, en phase préliminaire, tout projet peut disposer du dossier complet de développement/validation de ce procédé sans avoir besoin de redévelopper une maquette. Par conséquent, par exemple à travers un audit, il peut déterminer rapidement l'adéquation entre le procédé et le besoin du projet afin de prendre une décision quant à sa sélection.

### Méthode de validation

Le procédé est validé par injection de fautes. Deux types d'injection, avec des objectifs distincts, sont ainsi réalisés.
- Dans une première phase, une injection logicielle d'erreurs déterministes est réalisée. Dans la mesure où cette injection est synchrone, il est possible de rejouer les scénarios d'erreurs lorsque le procédé est mis en défaut. Cette phase permet ainsi de valider le procédé, et potentiellement de le faire évoluer afin d'améliorer ses performances de détection/correction d'erreurs.
- Dans une deuxième phase, une injection d'erreurs aléatoires est réalisée en soumettant les composants principaux de la réalisation à un faisceau de particules (ions lourds, protons) dans un accélérateur de particules. Cette phase, complémentaire de la précédente, permet une validation de bout en bout car le spectre des erreurs injectées est plus large. De plus, puisque la distribution des erreurs est représentative d'un environnement applicatif réel, elle permet de mesurer finement le taux de couverture d'erreurs du procédé.

### Réalisation matérielle

La réalisation matérielle développée est constituée principalement de trois parties : l'unité de traitement, l'unité d'acquisition et l'unité d'observabilité.

L'unité de traitement est développée autour d'un microprocesseur de type Power PC 603e et de sa mémoire, ainsi que d'un composant programmable intégrant tous les mécanismes matériels du procédé.

L'unité d'acquisition permet de simuler plusieurs canaux d'acquisition pour le microprocesseur, chacun de ces canaux ayant des caractéristiques particulières : acquisitions effectuées sur demande du microprocesseur (simulation de capteurs simples), acquisitions effectuées cycliquement et que le microprocesseur doit lire à la volée (simulation de capteurs intelligents tel qu'un senseur stellaire ou un GPS), réception de télécommandes, etc. Ces canaux d'acquisition sont réalisés autour de nano-contrôleurs de type PIC 16C73A.

L'unité d'observabilité intègre la commande-contrôle de la réalisation (chargement du logiciel, observabilité du microprocesseur, etc.) ainsi qu'un canal permettant la simulation des actuations effectuées par le microprocesseur. Les sorties sur ce canal sont systématiquement contrôlées pour vérifier qu'il n'y a pas de fausses actuations générées par le calculateur malgré le fait qu'il soit soumis à des erreurs transitoires.

### Réalisation logicielle

Afin d'être le plus représentatif possible des applications temps réel embarquées, spatiales ou d'autres domaines, le logiciel applicatif développé (i.e. la réalisation logicielle) dispose des caractéristiques suivantes :
- séquencement basé sur un séquenceur cyclique, qui sera ultérieurement remplacé par un exécutif temps réel commercial ;
- plusieurs tâches applicatives principales, par exemple six, de priorités différentes, certaines cycliques, d'autres apériodiques asynchrones ; l'une des tâches étant le coeur du programme de contrôle d'attitude d'un engin spatial ;
- l'application est basée sur des cycles temps réel rythmés par une horloge temps réel, les tâches applicatives ayant des périodicités différentes ;
- plusieurs tâches applicatives, par exemple trois, sont préemptées par des tâches plus prioritaires ;
- le logiciel doit réagir en temps réel à des événements asynchrones externes provenant des canaux d'acquisition.

### RÉFÉRENCES

[1] « La transition vers les pratiques commerciales en composants électroniques : une voie d'innovation majeure » de P. Lay, F. Bezerra, P. Castillan, J-P. Fortea, R. Laulheret, et M. Barré. (Systèmes et Services à Petits Satellites, Symposium International, 24-28 juin 1996, Annecy, France)
[2] « L'environnement radiatif spatial » de J.C. Boudenot, (L'Onde électrique, mai-juin 1991, vol.71, n°3, p.62-68)
[3] « Effet des radiations sur les composants électroniques » de R. Ecoffet, (module IV, §5.4, p.493-513, du cours « Techniques et technologiques des véhicules spatiaux » du CNES, Cépaduès-Editions, 1998)
[4] « Opération of commercially-based microcomputer technology in a space radiation environment » de J.N. Yelverton, (AIAA Computing in Aerospace Conférence, 9th, San Diego, CA, 19-21 octobre 1993, pages 192-201, référence : AIAA-93-4493-CP)
[5] « The theory and practice of reliable system design », de D.P. Siewiorek, et R.S. Swarz, (Digital Press, ISBM 0-932376-13-4, 1982, chapitre 3, p.118-119)
[6] « Design and analysis of fault tolérant digital systems » de B.W. Johnson, (Addison-Wesley, ISBN 0-201-07570-9, chapitre 3.6, p.134-136, 1988)
[7] « Expérimental evaluation of two concurrent error detection schemes » de M.A. Schuette, J.P. Shen, D.P. Siewiorek, et Y.X. Zhu (Fault Tolerant Computing Symposium, 1986, p.138-143)
[8] « Fault recovery of triplicated software on the iAPX 432 » de X.Z. Yang, et G. York, (Distributed Computing System, mai 1985. p.438-443).
[9] « Transient fault tolerance in digital systems » de Janusz Sosnowski (IEEE Micro, vol. 14, N°1, 1er février 1994 (1994/02/01), pages 24-35, XP000433306).
[10] EP-A-0 133 004
[11] « A survey of microprocessor architectures for memory management » de Furth B et al. (Computer, US, IEEE Computer Society, Long Beach., CA, US, Vol. 20, N° 3, page 48-67 XP002034222 ISSN : 0018-9162).

## Revendications

1. Procédé de traitement d'un système électronique soumis à des contraintes d'erreurs transitoires, **caractérisé en ce que**, dans un cycle temps réel donné, c'est-à-dire dans un cycle opérationnel donné d'une tâche logicielle qui s'éxécute de façon périodique et continuelle, on multiplexe dans le temps deux chaînes virtuelles implantées sur une seule chaîne physique ; les données résultantes de chaque exécution d'une chaîne virtuelle étant stockées afin d'être votées avant utilisation, et **en ce que**, en cas de détection d'erreur, on inhibe le cycle temps réel en cours, et on recharge un contexte sain pour effectuer une reprise consistant en une exécution nominale du cycle suivant à partir du contexte rechargé.

2. Procédé selon la revendication 1, dans lequel on utilise trois niveaux de zones de confinement des erreurs : temporel, logiciel et matériel.

3. Procédé selon la revendication 1, dans lequel on utilise un plan mémoire de l'unité centrale protégé des événements singuliers par code détecteur et correcteur d'erreur.

4. Procédé selon la revendication 1, dans lequel la granularité de détection/correction retenue est le cycle opérationnel des tâches logicielles s'éxécutant sur le calculateur.

5. Procédé selon la revendication 1, dans lequel la fonction « sauvegarde de contexte » activée régulièrement est réalisée grâce à un changement d'index.

6. Procédé selon la revendication 1, dans lequel la fonction « restauration de contexte » activée lors d'une correction d'erreurs est réalisée grâce au fait que l'index indiquant le contexte jugé sain, c'est-à-dire exempt d'erreurs, du cycle opérationnel précédent n'est pas changé, alors qu'il a basculé en temps normal, c'est-à-dire lorsqu'aucune erreur n'est détectée ; ce « non basculement » étant inhérent à l'inhibition du cycle opérationnel dans lequel l'erreur est détectée.

7. Procédé selon la revendication 1, dans lequel on utilise une segmentation de la mémoire associée à un dispositif matériel de contrôle des droits d'accès.

8. Procédé selon la revendication 7, dans lequel le dispositif matériel de contrôle des droits d'accès permet plusieurs configuration d'accès, chaque configuration autorisant l'accès à un ou plusieurs segments non contigus.

9. Procédé selon la revendication 7, dans lequel le dispositif matériel de contrôle des droits d'accès permet la sélection des configurations d'accès selon des combinaisons logiques de une ou plusieurs clés.

10. Procédé selon la revendication 1, dans lequel on utilise une mise en table des variables/données qui doivent être votées.

11. Procédé selon la revendication 1, dans lequel on utilise un vote logiciel dont l'intégrité est assurée par des contrôles logiciels, incluant en particulier un processeur de surveillance logiciel, et matériels.

12. Procédé selon la revendication 1, dans lequel on utilise un contrôle des transferts vers l'électronique de commande par un dispositif matériel vérifiant les droits d'accès et limitant dans le temps la validité de ce transfert, délimitant ainsi une zone de confinement des erreurs au niveau matériel.

13. Procédé selon l'une quelconque des revendications précédentes, qui est utilisé dans le domaine spatial.

## Patentansprüche

1. Verfahren zur Behandlung eines vorübergehenden Fehlern unterworfenen elektronischen Systems, **dadurch gekennzeichnet, dass** man innerhalb eines gegebenen Echtzeitzyklus, das heißt innerhalb eines gegebenen Operationszyklus einer Softwareaufgabe, die auf eine periodische und kontinuierliche Art abgearbeitet wird, zwei in einen physikalische Ablauf eingebettete virtuelle Abläufe in zeitlich multiplext, wobei die resultierenden Daten von jeder Ausführung eines virtuellen Ablaufs gespeichert werden, damit über sie vor Verwendung abgestimmt wird, und dadurch, dass man im Fall der Detektion eines Fehlers den laufenden Echtzeitzyklus hemmt und einen gesunden Kontext nachlädt, um eine Wiederaufnahme, bestehend aus einer nominellen Ausführung des folgenden Zyklus ausgehend vom nachgeladenen Kontext, durchzuführen.

2. Verfahren nach Anspruch 1, bei dem man drei Stufen von Fehlerbegrenzungszonen benutzt: zeitlich, softwaremäßig und hardwaremäßig.

3. Verfahren nach Anspruch 1, bei dem man eine Speicheranordnung der Zentraleinheit, welche vor außerordentlichen Ereignissen durch einen Fehlerdetektions- und Fehlerkorrekturcode geschützt ist, benutzt.

4. Verfahren nach Anspruch 1, bei dem die Feinheit der gespeicherten Detektion/Korrektur der Operationszyklus der Softwareaufgaben, die man auf dem Rechner ausführt, ist.

5. Verfahren nach Anspruch 1, bei dem die regelmäßig aktivierte Funktion "Sicherung des Kontextes" durch eine Indexänderung realisiert wird.

6. Verfahren nach Anspruch 1, bei dem die anlässlich einer Fehlerkorrektur aktivierte Funktion "Wiederherstellung des Kontextes" durch die Tatsache realisiert ist, dass der Index, welcher anzeigt, dass der Kontext des vorausgehenden Operationszyklus als gesund, d.h. frei von Fehlern, beurteilt worden ist, nicht verändert wird, während er bei normalem Zeitablauf, d.h. jedes Mal wenn kein Fehler detektiert wird, umgeschaltet wird, wobei dieses "Nichtumschalten" inhärent mit der Hemmung des Operationszyklus, in dem der Fehler detektiert wird, erfolgt.

7. Verfahren nach Anspruch 1, bei dem eine mit einem Hardwareverfahren zur Kontrolle der Zugriffsrechte verbundene Speichersegmentierung benutzt wird.

8. Verfahren nach Anspruch 7, bei dem das Hardwareverfahren zur Kontrolle der Zugriffsrechte mehrere Zugriffskonfigurationen erlaubt, wobei jede Konfiguration den Zugriff auf ein oder mehrere nichtangrenzende Speichersegmente freigibt.

9. Verfahren nach Anspruch 7, bei dem das Hardwareverfahren zur Kontrolle der Zugriffsrechte die Auswahl von Zugriffskombinationen gemäß logischer Kombinationen von einem oder mehreren Schlüsseln erlaubt.

10. Verfahren nach Anspruch 1, bei dem man eine Tabellierung der Variablen/Daten, über die abgestimmt werden muss, benutzt.

11. Verfahren nach Anspruch 1, bei dem man eine softwaremäßige Abstimmung verwendet, deren Integrität durch softwaremäßige Kontrollen, die insbesondere einen softwaremäßigen Überwachungsprozessor beinhalten, und hardwaremäßige Kontrollen sichergestellt wird.

12. Verfahren nach Anspruch 1, bei dem man eine Kontrolle der Übertragung an die Steuerungselektronik durch eine hardwaremäßige Vorrichtung, welche die Zugriffsrechte verifiziert und die Gültigkeit von dieser Übertragung zeitlich beschränkt und auf diese Weise eine Fehlerbegrenzungszone auf der hardwaremäßigen Stufe definiert, benutzt.

13. Verfahren nach einem der vorhergehenden Ansprüche, welches auf dem Gebiet der Raumfahrt verwendet wird.

## Claims

1. Process for processing an electronic system subject to transient error constraints, **characterized in that**, in a given real time cycle, i.e. in a given operational cycle of a software task performed periodically and continuously, time multiplexing takes place of two virtual sequences installed on a single physical sequence, the data resulting from each execution of a virtual sequence being stored in order to be voted prior to use, and **in that**, in the case of an error detection, the real time cycle taking place is inhibited, and a healthy context is reloaded in order to perform a restart consisting of a nominal execution of the following cycle on the basis of the reloaded context.

2. Process according to claim 1, in which three error confinement areas (time, software and hardware) are used.

3. Process according to claim 1, in which a memory plane in the control unit is used, protected from singular events by an error detection and correction code.

4. Process according to claim 1, in which the detection/correction granularity used is the operational cycle of the software tasks performed on the computer.

5. Process according to claim 1, in which the "backup context" function activated regularly is achieved by means of an index change.

6. Process according to claim 1, in which the "restore context" function activated during an error correction is performed due to the fact that the index indicating the context considered to be healthy after the previous real time cycle has not changed, even though it has usually swapped, in other words no errors are detected; this "no swap" being inherent to inhibition of the real time cycle in which the error is detected.

7. Process according to claim 1, in which segmentation of the memory is associated with a hardware device to check access rights.

8. Process according to claim 7, in which the hardware device to check access rights enables several access configurations, each configuration allowing access to one or several non-contiguous segments.

9. Process according to claim 7, in which the hardware device to check access rights is used to select several access configurations with logical combinations of one or several keys.

10. Process according to claim 1, in which the variables/data to be voted are put into a table.

11. Process according to claim 11, in which a software vote is used for which integrity is achieved by software checks, particularly including a software and hardware monitoring processor.

12. Process according to claim 1, in which a transfer to the control electronics is controlled by a hardware device that checks access rights and limits the validity of this transfer in time, thus delimiting a hardware error confinement area.

13. Process according to any one of the previous claims, used in space applications.
